# EUROPÄISCHE PATENTSCHRIFT

(11) **EP 1 058 885 B1**
(45) Veröffentlichungstag und Bekanntmachung des Hinweises auf die Patenterteilung: **28.11.2001**
(21) Anmeldenummer: 99911732.8
(22) Anmeldetag: 03.03.1999
(51) Int. Cl.: G06F 9/46

(54) **PLATTFORM EINES RECHNERSYSTEMS**
PLATFORM OF A COMPUTER SYSTEM
PLATE-FORME D'UN SYSTEME INFORMATIQUE

(30) Priorität: 04.03.1998 EP 98103827
(43) Veröffentlichungstag der Anmeldung: 13.12.2000
(73) Patentinhaber: SIEMENS AKTIENGESELLSCHAFT, 80333 München (DE)
(72) Erfinder: GASTHAUS, Elisabeth, D-81476 München (DE); OEHLERICH, Jörg, D-82131 Stockdorf (DE); HELD, Walter, D-82538 Geretsried (DE)
(86) Internationale Anmeldenummer: EP9901377
(87) Internationale Veröffentlichungsnummer: WO9945466

(56) Entgegenhaltungen:
- EP-A- 0 346 039
- US-A- 5 537 596

## Beschreibung

Aus dem Dokument EP-A-0 346 039 ist ein Rechnersystem bekannt, das eine Manager-Komponente umfaßt, die Parameter für die Lastverteilung und Laststeuerung des Rechnersystems verwaltet.

Ein Vermittlungsknoten ist ein Rechnersystem, von dem erwartet wird, daß er im Rahmen von Delay-Zeiten, die von den Kunden und den internationalen Standards gefordert werden, Aufträge bearbeiten kann. Beim Breitband-Vermittlungsknoten liegen diese Aufträge insbesondere auf sehr verschiedenen Gebieten, mit verschiedenen Delayzeit-Anforderungen, zeitlich schwankendem und ganz verschiedenartigem Lastaufkommen. Die Aufträge kommen außer aus der Vermittlungstechnik für Daten- und Sprachverkehr aus Aufgabenbereichen wie den Protokoll-Bearbeitungen (z.B. CCS7-Signalisierung, Breitband UNI-Interface, Breitband NNI-Signalisierung, Global Title Translation, PNNI-Protokoll, Public Access Interface, Private Branche Exchange Access, ... ), dem Management der Signallisierungsnetze (insbesondere bei Netzausfällen), der Bedienung der Betreiberschnittstelle, dem Billing, der Verkehrsstatistik, der Verwaltung der Teilnehmeranschlüsse, der Leitungsanschlüsse, der Wegedaten und Tarifzonen, weiterhin der Fehlerbehandlungen, die dafür sorgen, daß die "downtime" (Zeit, in der der gesamte Vermittlungsknoten, oder Teilkomponenten, nicht verfügbar sind) minimiert wird.

Da dieser Rechner im Netzverbund arbeitet, müssen nicht nur der Normalbetrieb, sondern auch andere Betriebszustände, z.B. die Inbetriebnahme , bei der eine netzweite Kommunikation angestoßen wird, zeitlich optimal verlaufen. Abhängig von den Betriebszuständen liegen also die Delayzeit-Anforderungen verschieden, und es muß darauf adäquat reagiert werden.

Das von Vermittlungsknoten erwartete Realzeitverhalten stellt also spezielle Anforderungen an die Knotenarchitektur und das Betriebssystem. Diese bestehen darin, daß die Prozessorlaufzeitkapazitäten zu jeder Zeit bestmöglich auf die verschiedenen Anwendungsprogramme verteilt sein müssen.

In dem neuen ATM-Vermittlungsknoten werden, um das zu gewährleisten, dem Betriebssystem Zeitbudgetwerte zur Verfügung gestellt, so daß es den verschiedenen Applikationen eine Mindestzugriffszeit zum Prozessor garantieren kann.

Da Telekommunikationsnetze einem ständigem Wandel bezüglich Leistungsmerkmalen, Architektur und Größe unterworfen sind, müssen die Vermittlungsknoten in Telekommunikationsnetzen in den Funktionalitäten, die sie anbieten, ausgesprochen variabel und in ihrer Größe skalierbar sein.

Ein Vermittlungsrechner muß also insbesondere wachsen können, und zwar mit minimalen, also möglichst keinen Betriebsunterbrechungen: Dazu gehört der HW-Upgrade zur Verstärkung der bereits existierenden Prozessorleistung, der SW-Upgrade zum Hochrüsten der Leistungsmerkmale, und (unter Umständen im Zusammenhang damit) eine Neuverteilung der Zeitbudgets am Prozessor inkl. anderer Parameter , z.B. Lastschwellen für die Lastkontrolle, Scanintervalle, Protokoll-Budgets. Insbesondere die genannten Parameter sollten unterbrechungsfrei änderbar sein.

Bisher erfolgte eine verteilte Ablage der genannten Parameter bei den verschiedenen Anwendern, d.h. die Parameter wurden in den Anwendungsprogrammen deklariert). Die Schnittstellenverwaltung bezüglich der Parameter erfolgte ebenfalls durch die Anwender.

Da die Gesamtheit der Laststeuerungsparameter und Lastverteilungsparameter (im folgenden kurz als Laststeuerungsparameter bezeichnet) in viersstelliger Größenordnung liegen und sie für Lastverteilung (Zeitaufteilung auf die verschiedenen Applikationen entsprechend Durchsatz und Delayzeitanforederungen, von denen viele, aber nicht alle für das Scheduling gebraucht werden.) und Laststeuerung elementar wichtig sind, würde ihre (bisherige) verteilte Ablage bei den verschiedenen Anwendern und ihre Verwaltung durch sie (über entsprechend viele Anwender-Schnittstellen) zu einem erheblichen, wenn nicht unlösbaren Engineering-Problem führen, wobei das Problem darin bestehen würde, eine situationsgerechte Anpassung (bei der Konfiguration und zur Laufzeit) der aktuell gültigen Parameterwerte zum Zwecke der optimalen Lastverteilung und Laststeuerung durchzuführen.

Der Erfindung liegt die Aufgabe zugrunde, das genannte Problem zu lösen.

Die Lösung wird durch einen Last-Modell-Manager erreicht, der die Parameter, die die Laststeuerung und die Lastverteilung des Systems und somit die Performance des Systems beeinflussen, einheitlich in einem sogenannten Last-Modell-Katalog verwaltet.

Im folgenden wird ein Ausführungsbeispiel der Erfindung anhand der Zeichnung näher beschrieben, wobei die Zeichnung vier Figuren umfaßt:
- Fig. 1: Architektur eines ATM-Knotens;
- Fig. 2: Scheduling von Prozessen;
- Fig. 3: Beziehung des Lastmodell-Managers zu verschiedenen Komponenten;
- Fig. 4: Auswahl der Lastmodelle.

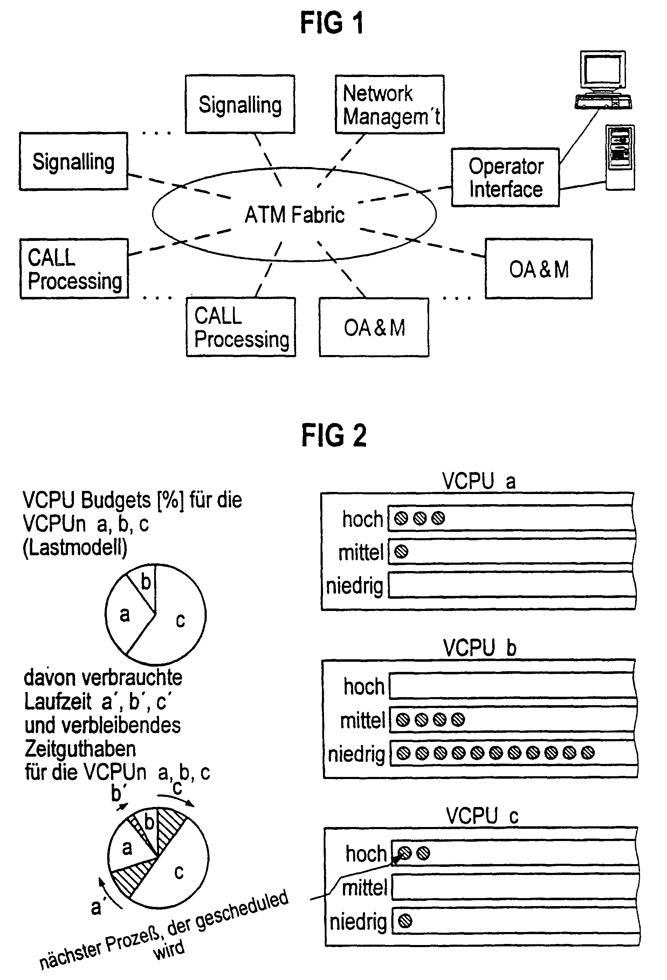

Zunächst wird anhand von FIG 1 die Architektur eines bsph. ATM-Knotens dargelegt.

Die wichtigste Steuerung des Breitbandknotens wird in einem skalierbaren Cluster von Hauptprozessoren durchgeführt. Alle Prozessoren kommunizieren über ein ATM-Koppelnetz (ATM-Fabric) mittels eines gemeinsamen internen Protokols. Ein einzelner Hauptprozessor mit seinem Anteil an der Gesamtsoftware des Systems wird im folgenden als Plattform bezeichnet.

Das hier betrachtete Cluster kann in seiner Maximalkonfiguration aus 128 einzelnen Plattformen bestehen. Hardware und Basis-Software (z.B. Betriebssystem und Laststeuerungssoftware) sind für alle gleich. Das heißt, diese Basis muß den Ansprüchen aller bekannter Nutzungsarten/Applikationen entsprechen. Zugleich muß sie auch so umfassend sein, daß jederzeit einer Forderung nach neuen (u.U. heute noch unbekannten) Nutzungen effizient nachgekommen werden kann. Diese Nutzungsarten sind durch verschiedenen Applikationssoftwarepaketen auf den Plattformen realisierbar. Es gibt Plattformen für:
- Vermittlungstechnik (Call Processing) (können mehrfach im Knoten vorhanden sein)
- Protokollumsetzungen (können mehrfach im Knoten vorhanden sein)
- Operation, Administration und Maintenance (können mehrfach im Knoten vorhanden sein)
- Management der Netzsignalisierung (ist genau einmal im Knoten vorhanden)
- Betreiberschnittstelle (ist genau einmal im Knoten vorhanden)

Die Gesamtheit der auf einer Plattform vorhandenen Software für o.g. Aufgaben einschließlich Basissoftware wird auch als Ladetyp bezeichnet. Über diese "reinen" Ladetypen hinaus müssen auch Plattformen mit sog. kombinierten Ladetypen bereitgestellt werden, damit Minimalkonfigurationen kundengerecht und kostengünstig breitgestellt werden können. Gerade diese Plattformen sind eine Herausforderung für die sorgfältige Abstimmung der garantierten Minimallaufzeitbudgets der Applikationen, denn hier ist die Konkurrenz besonders verschiedenartiger Anwenderprogramme um die Zuteilung der Prozessorlaufzeit am größten.

Im folgenden wird das Betriebssystem und die Lastkontrolle näher erläutert.

### Prozeßbegriff und CHILL

Die oben erwähnten Applikationen sind als Prozesse realisiert und werden im folgenden als solche referenziert. Als Prozeß wird hier eine laufzeitbezogene Einheit verstanden. Der Prozeß als ablauffähige Softwareeinheit hat Attribute, von denen hier diejenigen, die sein Zugangsrecht zum Prozessor beeinflussen, interessant sind. Die Attribute sind statisch implementiert. Der Prozeß mit seinen Attributen ist sprachlich (CHILL) erklärt und compilerunterstützt. Beim Systemhochlauf werden die Prozesse in einer betriebssystemgerechten Form, unter Berücksichtigung ihrer Attribute, bereitgestellt.

Die zwei für das Realzeitverhalten wichtigen Attribute der Prozesse bestimmen
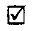 die Zugehörigkeit zu einer Aufgabengruppe und
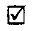 die Zugehörigkeit zu einer Kategorie von Delayzeit-Anforderungen innerhalb dieser Aufgabengruppe.

Die Aufgabengruppen sind diejenigen Einheiten, denen eine Mindestzugriffszeit auf den Prozessor der Plattform, auf der sie residieren, garantiert wird.

Die Kategorie der Delayzeitanforderungen eines Prozesses innerhalb dieser Aufgabengruppe bestimmt die Art, wie Prozesse, die auf der gleichen Plattform zur gleichen Aufgabengruppe gehören, um Rechenzeit konkurrieren, wenn sie gleichzeitig ablaufbereit sind. Dieses Attribut, das die Prozesse innerhalb einer Aufgabengruppe unterscheidet, ist die sog. Prozeßpriorität. (Vgl. unten den Abschnitt "Scheduling")

### Betriebssystemanteil: Service Addressing

Besonders bei einem großen Ausbau des Knotens will man die Anforderungen so auf das Cluster verteilen, daß möglichst keine einzelne Plattform überfordert wird. Das übernimmt der Betriebssystemanteil Service Addressing.

Das Betriebssystem einer jeden Plattform kennt alle im gesamten Cluster angebotenen und ansprechbaren Funktionen als "Services". Ein Service kann auf der Plattform, auf der er verlangt wird, angeboten sein und/oder auf einer oder mehreren anderen Plattformen des Clusters. Um den Kommunikations-Overhead zwischen den Plattformen zu vermeiden, wird dem nachfragenden User die Ansprechadresse des Services der eigenen Plattform - falls dort vorhanden - mitgeteilt. Befindet sich diese Plattform jedoch in einem Uberlastzustand (siehe auch unten den Abschnitt "Lastkontrolle"), so wird eine andere Plattform im Cluster ausgewählt, die diesen Service auch anbietet, sofern sich eine solche in einem niedrigeren Lastzustand befindet. Das ist möglich, weil sich auf jeder Plattform ein aktuelles Lastabbild des gesamten Clusters befindet.

### Betriebssystemanteil: Scheduling

Besonders bei einer minimalen Konfiguration des Clusters muß die Rechenkapazität eines einzelnen Prozessors sorgfältig auf die Applikationen verteilt werden.

Dazu muß das Betriebssystem einer jeden Plattform die Prozesse, die auf ein und derselben Plattform um Rechenzeit konkurrieren, besonders unter hoher Last so unterstützen, daß sie die Realzeitanforderungen an den Vermittlungsknoten einhalten können. Um das zu ermöglichen, werden die Prozesse zu Aufgabengruppen zusammengefaßt.

FIG 2 zeigt ein Beispiel zum Scheduling der Prozesse. Für jede der Aufgabengruppen ist durch Laststeuerungsparameter ein garantierter Mindestanteil der Prozessorzeit als Laufzeitbudget (d.h. Nettorechenzeit) definiert. Daher werden diese Aufgabengruppen auch als Virtuelle CPUn (VCPU) bezeichnet. Pro VCPU und Priorität werden die Prozesse einer FIFO-Warteschlange zugewiesen und warten dort auf Zuteilung der CPU.

Das Scheduling arbeitet im Time Slicing. Zu Beginn eines jeden Zeitschlitzes betracht es pro VCPU ein Zeitguthabenkonto, indem es die Summe aller gemessenen Laufzeiten der Prozesse einer VCPU mit dem garantierten Zeitbudget vergleicht. Das Resultat dieses Vergleichs ist ein VCPU-individuelles Zeitguthaben.

In der VCPU mit dem größten Zeitguthaben bekommt derjenige wartende Prozeß als erster Rechenzeit, der an der ersten Stelle der Warteschlange höchster Priorität wartet (siehe FIG. 2).

Vertagt sich der Prozeß noch während diese Zeitschlitzes, so folgt aus der gleichen VCPU (und gegebenenfalls der gleichen Warteschlange) der nächste Prozeß. Wartet aus dieser VCPU kein Prozeß mehr, so kommt der Scheduling-Algorithmus wie zu Beginn des Zeitschlitzes zum Tragen. Zu Beginn des nächsten Zeitschlitzes findet erneut der Schedulingalgorithmus Anwendung.

### Lastkontrolle (Laststeuerung)

Die Lastkontroll-SW vergleicht zyklisch die akuelle Lastsituation der eigenen Platform mit plattformindividuellen Schwellenwerte und kennzeichnet gegebenenfalls den Prozessor als im Zustand Überlast befindlich. Gegeben ist der Zustand Überlast für einen Prozessor, wenn die angebotene totale Last höher liegt, als die Lastschwellen, die fur diesen Prozessor gegeben sind. Diese Lastinformation wird systemweit verteilt, so daß Service Adressing in der Lage ist, überlastete Plattformen zu "schonen".

Sobald ein Prozessor im Zustand Überlast ist, stellt die Lastkontrolle außerdem anhand der Laufzeitbudgets der VCPUn fest, welche dieser VCPUn ihr Budget überschritten hat/haben. Diese VCPU/n wird/werden dann auch als überlastet bezeichnet. Geeignete Prozesse innerhalb dieser überlasteten VCPU/n werden informiert und damit aufgefordert, ihre Lastangebot an den Prozessor zu reduzieren.

Nach der oben dargelegten MP-Betriebssystemstruktur des ATM Vermittlungsknotens arbeiten also sowohl die Laststeuerung als auch das Prozeß-Scheduling im Betriebssystem mit einer Reihe von Laststeuerungsparametern, um die Voraussetzungen für ein optimales Realzeitverhalten zu schaffen. Da Betriebssystem und Laststeuerung für alle MP-Plattformen generisch, d.h. einheitlich sind, müssen diese Daten für sämtliche möglichen Funktionsausprägungen einer Plattform auf jedem MP verfügbar sein. Außerdem müssen sie interaktiv auf der Plattform "aktivierbar" sein, z.B. während des Konfigurierens, um der Funktionsausprägung Rechnung zu tragen. Des weiteren müssen die Daten dem jeweiligen Betriebszustand (z.B. Recovery) der Plattform angepaßt sein, um auf die verschiedenen Anforderungen dieser Betriebszustände optimal einzugehen.

### Load Model Management

Die dargestellten Anforderungen und Mechanismen, wie Skalierbarkeit des Netzknotens, Verteilung des Lastangebots auf die Plattformen, Aufteilung der Rechnerkapazität einer Plattform auf die verschiedenen Anwender, Prozeßkonzept mit statischen Prozeßattributen sowie die Lastkontrolle sind noch nicht alle Mechanismen, die im Zusammenhang mit Laststeuerungsparametern stehen. Darüberhinaus gibt es noch Taktinformationen, Laufzeitbeschränkungen für das interne Protokoll, die Berücksichtigung der Grundlast, weitere Unter-Budgetaufteilungen und Schwellenwerte, auf die hier nicht eingegangen werden soll.

Betrachtet man Menge und Komplexität der Laststeuerparameter, sowie Anforderungsprofil und Funktionsgeflecht, in dem sie stehen, so wird deutlich, daß es notwendig ist, sie übersichtlich zu implementieren und von einer eigenen Software kontrollieren zu lassen.

Alle Parameter, die die Laststeuerung und die Lastverteilung des Systems beeinflussen, werden deshalb in einem auf jeder Plattform replizierten Katalog abgespeichert. Das schafft eine Übersichtlichkeit, die insbesondere wichtig ist, wenn in der Designphase die Änderung an einem der Parameter mit den Werten anderer Parameter interferiert. Zur Laufzeit hat nur noch eine einzige Managementfunktion (LM-Manager) Zugang zu diesem Katalog, die auch die Schnittstellen zu den Parameteranwendern unterhält. Diese Managementfunktion ist auch empfänglich für Trigger, die über definierte Schnittstellen zur Laufzeit Änderungen der aktuellen gültigen Parameter anfordern können (z.B. über interaktive Kommandos durch den Betreiber). Sie trägt die Verantwortung für das Informieren aller von den Änderungen betroffenen Anwender. Die Struktur des Parameterkatalogs ist so gewählt, daß online-Änderungen der gültigen Parameter sinnvoll eingeschränkt werden. Nur durch diese Form des Managements und der Strukturierung ist ein Engineering der komplexen Einflußgrößen möglich und fehlerfrei implementierbar.

Durch das Load Model Management wird die komplexe und umfangreiche Vielfalt von Laststeuerungsparametern in einer Weise strukturiert, die zum einen die Übersichtlichkeit zum Zwecke der Engineerbarkeit gewährleistet, einschließlich der fehlerfreien Implementierbarkeit. Zum anderen wird aber eine Flexibilität ermöglicht, die Voraussetzungen für eine situationsgerechte Anpassung (bei der Konfiguration und zur Laufzeit) der aktuell gültigen Parameterwerte zum Zwecke der optimalen Performance hinsichtlich Lastverteilung und Laststeuerung.

Interaktiv kann aus dem Parameterkatalog immer nur eine einzige Tabelle ausgewählt und "aktiviert" werden, wodurch kein Wert aus einer anderen Tabelle des Katalogs Anwendung finden kann (solange diese Tabelle "aktiv" ist). Wechselnde Betriebszustände der Plattform wiederum können nur zwischen vorgefertigten Datensätzen auswählen und zwischen diesen wechseln.

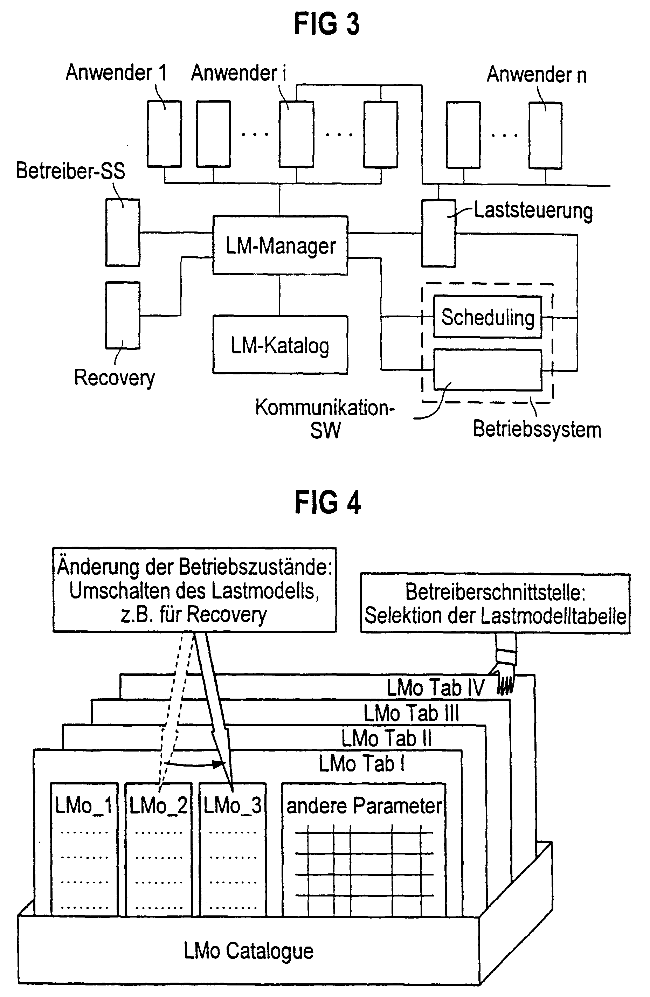

FIG 3 zeigt die Beziehungen des Lastmodell-Managers zu verschiedenen Komponenten innerhalb des Systems. Es gibt drei unterschiedliche Typen von Anwendern des LM-Managers. Einen ersten Anwendertyp (Anwender 1), der nur mit dem LM-Manager in Verbindung steht. Als beispielh. Anwender ist hier die Recovery-Komponente zu nennen. Einen zweiten Anwendertyp (Anwender i), der sowohl mit dem LM-Manager als auch mit der Laststeuerung in Verbindung steht. Als beispielh. Anwender ist hier die Scheduling-Komponente zu nennen.
Schließlich dritten Anwendertyp (Anwender n), der nur Werte von der Laststeuerung erhält. Als beispielh. Anwender ist hier die Vermittlungstechnik-Komponente zu nennen.

### Betreiberschnittstelle

Z.B. bei der Inbetriebnahme des Vermittlungsknotens muß jede einzelne Plattform des Clusters konfiguriert werden. Das bedeutet,
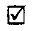 daß der Ladetyp zugewiesen und geladen wird und
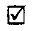 daß aus dem auf allen Plattformen replizierten Lastmodellkatalog eine Lastmodelltabelle ausgewählt wird.

Die Art der Organisation der zentralen Laststeuerparameter im Lastmodellkatalog wird unten im Abschnitt "Lastmodellkatalog" vertieft.

Eine Lastmodelltabelle aus dem Lastmodellkatalog ist einem Ladetyp eindeutig zugeordnet, wobei für einen Ladetyp mehrere Tabellen vorhanden sein können (z.B. für unterschiedliche Belastungserwartungen oder Betriebszustände).

Nach der Auswahl der Tabelle gelten dann bis zum unterbrechungsfreien Austausch dieser Tabelle ausschließlich die in ihr aufgeführten Werte, die einen in sich konsistenten Satz an Parametern darstellen. Das bedeutet eine sinnvolle Einschränkung, die dem Betreiber die Bedienung des Knotens erleichert und ihm die Sicherheit gibt, immer aufeinander abgestimmte Parameter in Betrieb zu nehmen. Die Auswahlmöglichkeit unter verschiedenen Lastmodelltabellen gibt ihm die Möglichkeit eines Tunings der Plattformen.

Das heißt, der Betreiber kann je nach Belastungserwartung an die verschiedenen VCPUn geeignete VCPU-Budgets einrichten. Da er unterbrechungsfrei während des Betriebs die aktuell gültige Lastmodelltabelle austauschen kann, können die Budgets problemlos geänderten Bedingungen (z.B. durch HW- oder SW-Upgrade im Knoten) angepaßt werden.

Per SW-Patch, der vom Hersteller auf Konsistenz geprüft und geliefert werden kann, können Werte innerhalb einer Tabelle geändert werden. Ein Betreiberkommando kann dann die gepatchte Tabelle betriebsunterbrechungsfrei selektieren (vgl. Fig. 3) und die Steuerungssoftware (Load Model Management) sorgt für die Informierung der betroffenen Applikationen.)

Zur Koordination der Auswahl siehe weiter unten den Abschnitt "Steuerungssoftware" und FIG. 4.

### Lastmodellkatalog

Der Lastmodellkatalog stellt die Organisationsstruktur derjenigen Lastmodellparameter dar, die zentral implementiert sind.¹
¹ Im Gegensatz dazu sind Prozeßattribute ja dezentral bei jedem einzelnen Prozeß erklärt, vgl. Oben den Abschnitt "Prozeßbegriff".

Er besteht aus einzelnen Lastmodelltabellen, die interaktiv jeder Plattform zugewiesen werden können. (vgl. Abschnitt "Betreiberschnittstelle".)

Jede Lastmodelltabelle aus dem Lastmodellkatalog enthält zum einen mehrere Lastmodelle, die die zu garantierenden Budgets für die VCPUn enthalten Verschiedene Lastmodelle werden benötigt, um den unterschiedlichen Anforderungen der Plattform-Betriebszustände, wie z.B. Startup oder Normalbetrieb, Rechnung tragen zu können.

Die Lastmodelltabelle enthält zum anderen noch die Taktinformationen, Überlastgrenzen und Laufzeitbeschränkungen für die Abwicklung des internen Protokolls, die Größe der Lastreserve, die Basislast sowie eine Tabelle, die die Zuordnung der Prozesse auf die VCPUn unterstützt.

### Steuerungssoftware (Load Model Manager)

Die Steuerungs-SW (Load Model Mangement bzw. Management-Komponente) ist ein betriebssystemnaher Prozess, der für das Auslesen der richtigen Parameter-Daten bei Inbetriebnahme bzw. Plattformzustandsänderungen sorgt.

Der Load Model Manager (Lastmodell-Manager Kurzform: LM-Manager) ermöglicht den unterbrechungsfreien Austausch der aktuell gültigen Lastmodellparameter. Dazu stellt er Schnittstellen fur die triggernden Ereignisse zur Verfügung. Des weiteren sorgt er für die Informierung der von diesem Ereignis betroffenen SW. Zu dieser SW gehören das Betriebssystem sowie Prozesse wie z.B. die Lastkontrolle. Wird durch einen Austausch der Lastmodelltabelle einer VCPU das Budget völlig entzogen, so müssen natürlich auch die dazugehörigen Service zurückgezogen werden.

Je nach internem Betriebszustand der betreffenden Plattform findet das eine oder andere Lastmodell Anwendung. Findet z.B. (siehe auch FIG 3 oder 4) während des Betriebs ein Recovery statt, so kann Recovery sich an Load Management wenden, damit vom normalen Betriebslastmodell auf ein spezielles Recovery-Lastmodell umgeschalten wird, so daß den geänderten Laufzeitansprüchen von Recovery Rechnung getragen wird. Load Model Management informiert die davon betroffene SW, wie z.B. Scheduling und die Lastkontrolle, selbständig von diesem Ereignis.

### Abkürzungen

- ATM Asynchronous Transfer Mode
- CCITT Commitee Consultatif de Telephonie et Telegraphie (heute ITU-T)
- CCS7 Common Channel Signalling System No.7 (Trunksignallisierung feste Bandbreite)
- CHILL CCITT High Level Language
- FIFO First In First Out
- ITU International Telecommunication Union
- Lmo oder LM Lastmodell (Load Model)
- NNI Network Network Interface ("Trunk"signallisierung variable Bandbreite)
- PNNI Private Network Network Interface
- SW Software
- UNI User Network Interface (Breitband Teilnehmer Signallisierung)
- VCPU Virtuelle CPU

## Patentansprüche

1. Plattform eines aus mehreren Plattformen bestehenden Rechnersystems, wobei die Plattform einen Prozessor des Rechnersystems und dessen Software umfaßt, mit einem Lastmodell-Manager, der die Parameter für die Lastverteilung und Laststeuerung des Rechnersystems verwaltet,
**gekennzeichnet durch**
einen Katalog, über den der Lastmodell-Manager die genannten Parameter verwaltet, wobei der Katalog eine Mehrzahl von Tabellen umfaßt, und wobei eine Tabelle jeweils ein Lastmodell umfaßt, d.h. einen kompletten konsistenten Satz der Parameter, die die Lastverteilung und -steuerung des Rechnersystems beeinflussen.

2. Plattform nach Anspruch 1,
**dadurch gekennzeichnet, daß**
mithilfe des Lastmodell-Managers eine Tabelle des genannten Katalogs als aktuell gültige Tabelle festlegbar ist.

3. Plattform nach Anspruch 2,
**dadurch gekennzeichnet, daß**
die durch die genannte Festlegung vollzogene Auswahl vom Ladetyp einer Plattform abhängt.

4. Plattform nach einem der Ansprüche 2 oder 3,
**dadurch gekennzeichnet, daß**
die durch die genannte Festlegung vollzogene Auswahl vom Betriebszustand einer Plattform abhängt.

5. Plattform nach einem der Ansprüche 2 bis 4,
**dadurch gekennzeichnet, daß**
die genannte Festlegung über mindestens eine Schnittstelle zu dem Lastmodell-Managers getriggert werden kann.

6. Plattform nach einem der Ansprüche 2 bis 5,
**dadurch gekennzeichnet, daß**
der Lastmodell-Manager Schnittstellen zu SW-Komponenten der Plattform aufweist, über die er diesen SW-Komponenten aktuell .gültige Laststeuerungs-Parameter aus der aktuell gültigen Tabelle mitteilt.

7. Plattform nach einem der Ansprüche 2 bis 6,
**dadurch gekennzeichnet, daß**
der Lastmodell-Manager eine Schnittstelle umfaßt, über die der Systemhersteller den Inhalt einer Tabelle während des Betriebs ändern kann.

## Claims

1. Platform for a computer system comprising a number of platforms, with the platform having a processor for the computer system and its software, having a load model manager which manages the parameters for load distribution and load control in the computer system,
**characterized by**
a catalogue, via which the load model manager manages the said parameters, with the catalogue comprising a number of tables, and with each table comprising a load model, that is to say a complete, consistent set of those parameters which influence the load distribution and control in the computer system.

2. Platform according to Claim 1,
**characterized in that**
the load model manager can be used to define one table in the said catalogue as the currently valid table.

3. Platform according to Claim 2,
**characterized in that**
the selection carried out by means of the said definition depends on the loading type of the platform.

4. Platform according to one of Claims 2 or 3,
**characterized in that**
the selection carried out by means of the said definition depends on the operating state of the platform.

5. Platform according to one of Claims 2 to 4,
**characterized in that**
the said definition can be triggered via at least one interface to the load model manager.

6. Platform according to one of Claims 2 to 5,
**characterized in that** the load model manager has interfaces to software components of the platform, via which it reports to these software components currently valid load control parameters from the currently valid table.

7. Platform according to one of Claims 2 to 6,
**characterized in that** the load model manager comprises an interface via which the system manufacturer can amend the contents of a table during operation.

## Revendications

1. Plate-forme d'un système informatique constitué de plusieurs plates-formes, la plate-forme comprenant un processeur du système informatique et son logiciel, comportant un gestionnaire de modèle de charge qui gère les paramètres pour la répartition de charge et la commande de charge du système informatique,
**caractérisée par** un catalogue par l'intermédiaire duquel le gestionnaire de modèle de charge gère lesdits paramètres, le catalogue comportant une pluralité de tables, et une table comportant respectivement un modèle de charge, c'est à dire un ensemble cohérent complet des paramètres qui influencent la répartition de charge et la commande de charge du système informatique.

2. Plate-forme suivant la revendication 1, **caractérisée en ce qu'**une table dudit catalogue peut être fixée comme table valable sur le moment à l'aide du gestionnaire de modèle de charge.

3. Plate-forme suivant la revendication 2, **caractérisée en ce que** la sélection effectuée par ladite fixation dépend du type de charge d'une plate-forme.

4. Plate-forme suivant l'une des revendications 2 ou 3, **caractérisée en ce que** la sélection effectuée par ladite fixation dépend de l'état de fonctionnement d'une plate-forme.

5. Plate-forme suivant l'une des revendications 2 à 4, **caractérisée en ce que** ladite fixation peut être déclenchée par l'intermédiaire d'au moins une interface avec le gestionnaire de modèle de charge.

6. Plate-forme suivant l'une des revendications 2 à 5, **caractérisée en ce que** le gestionnaire de modèle de charge comporte des interfaces avec des composants SW de la plate-forme par l'intermédiaire desquelles il communique à ses composants SW des paramètres de commande de charge valables sur le moment provenant de la table valable sur le moment.

7. Plate-forme suivant l'une des revendications 2 à 6, **caractérisée en ce que** le gestionnaire de modèle de charge comporte une interface par l'intermédiaire de laquelle le fabricant du système peut modifier le contenu d'une table pendant le fonctionnement.
